# EUROPÄISCHE PATENTSCHRIFT

(11) **EP 2 673 829 B1**
(45) Veröffentlichungstag und Bekanntmachung des Hinweises auf die Patenterteilung: **25.03.2015**
(21) Anmeldenummer: 11805798.3
(22) Anmeldetag: 07.12.2011
(51) Int. Cl.: H01M 10/44, B60L 15/00, H01G 9/26, H01G 11/72, H02J 4/00, H02J 7/14, B60L 11/18, H01G 11/08, H02J 7/00

(54) **STEUERBARER ENERGIESPEICHER UND VERFAHREN ZUM BETREIBEN EINES STEUERBAREN ENERGIESPEICHERS**
CONTROLLABLE ENERGY STORAGE AND METHOD FOR OPERATING A CONTROLLABLE ENERGY STORAGE
STOCKAGE D'ÉNERGIE CONTRÔLABLE ET PROCÉDÉ D'EXPLOITATION D'UN STOCKAGE D'ÉNERGIE CONTRÔLABLE

(30) Priorität: 08.02.2011 DE 102011003810
(43) Veröffentlichungstag der Anmeldung: 18.12.2013
(73) Patentinhaber: Robert Bosch GmbH, 70442 Stuttgart (DE)
(72) Erfinder: FEUERSTACK, Peter, 71642 Ludwigsburg (DE); WEISSENBORN, Erik, 70374 Stuttgart (DE); KESSLER, Martin, 73527 Schwaebisch Gmuend (DE)
(86) Internationale Anmeldenummer: PCT/EP2011/072044
(87) Internationale Veröffentlichungsnummer: WO 2012/107126

(56) Entgegenhaltungen:
- DE-A1-102009 000 674
- DE-A1-102009 000 676
- US-A- 5 642 275

## Beschreibung

Die Erfindung betrifft einen steuerbaren Energiespeicher und ein Verfahren zum Betreiben eines steuerbaren Energiespeichers.

### Stand der Technik

Es zeichnet sich ab, dass in Zukunft sowohl bei stationären Anwendungen, wie z.B. Windkraftanlagen, wie auch in Fahrzeugen, wie Hybrid- oder Elektrofahrzeugen, vermehrt elektronische Systeme zum Einsatz kommen, die neue Energiespeichertechnologien mit elektrischer Antriebstechnik kombinieren. In herkömmlichen Anwendungen wird eine elektrische Maschine, welche z.B. als Drehfeldmaschine ausgeführt ist, über einen Umrichter in Form eines Wechselrichters gesteuert. Kennzeichnend für derartige Systeme ist ein sogenannter Gleichspannungszwischenkreis, über welchen ein Energiespeicher, in der Regel eine Batterie, an die Gleichspannungsseite des Wechselrichters angeschlossen ist. Um die für eine jeweilige Anwendung gegebenen Anforderungen an Leistung und Energie erfüllen zu können, werden mehrere Batteriezellen in Serie geschaltet. Da der von einem derartigen Energiespeicher bereitgestellte Strom durch alle Batteriezellen fließen muss und eine Batteriezelle nur einen begrenzten Strom leiten kann, werden oft zusätzlich Batteriezellen parallel geschaltet, um den maximalen Strom zu erhöhen.

Die Serienschaltung mehrerer Batteriezellen bringt neben einer hohen Gesamtspannung das Problem mit sich, dass der gesamte Energiespeicher ausfällt, wenn eine einzige Batteriezelle ausfällt, weil dann kein Batteriestrom mehr fließen kann. Ein solcher Ausfall des Energiespeichers kann zu einem Ausfall des Gesamtsystems führen. Bei einem Fahrzeug kann ein Ausfall der Antriebsbatterie zum "Liegenbleiben" des Fahrzeugs führen. Bei anderen Anwendungen, wie z.B. der Rotorblattverstellung von Windkraftanlagen, kann es bei ungünstigen Rahmenbedingungen, wie z.B. starkem Wind, sogar zu sicherheitsgefährdenden Situationen kommen. Daher ist stets eine hohe Zuverlässigkeit des Energiespeichers anzustreben, wobei mit "Zuverlässigkeit" die Fähigkeit eines Systems bezeichnet wird, für eine vorgegebene Zeit fehlerfrei zu arbeiten.

Aus der US 5,642,275 A ist ein Multilevel-Umrichter mit mindestens einer Phase bekannt, wobei jede Phase eine Mehrzahl von Vollbrücken-Invertern mit jeweils zugeordneten unabhängigen Gleichstromquellen umfasst.

### Offenbarung der Erfindung

Die vorliegende Erfindung schafft einen steuerbaren Energiespeicher mit n parallelen Energieversorgungszweigen, mit n ≥ 1, welche jeweils einen ersten Teil-Energieversorgungszweig und einen dazu parallel geschalteten zweiten Teil-Energieversorgungszweig aufweisen. Dabei weist jeder Teil-Energieversorgungszweig jeweils mindestens ein Energiespeichermodul auf, welches jeweils mindestens eine elektrische Energiespeicherzelle mit einer zugeordneten steuerbaren Koppeleinheit umfasst. In Abhängigkeit von Steuersignalen unterbrechen die Koppeleinheiten den jeweiligen Teil-Energieversorgungszweig oder sie überbrücken die jeweils zugeordneten Energiespeicherzellen oder sie schalten die jeweils zugeordneten Energiespeicherzellen in den jeweiligen Teil-Energieversorgungszweig. Die Energiespeicherzellen der Energiespeichermodule in dem ersten Teil-Energieversorgungszweig und die Energiespeicherzellen der Energiespeichermodule in dem zweiten Teil-Energieversorgungszweig sind dabei antiparallel angeordnet und weisen somit entgegengesetzte Polaritäten auf.

Die Erfindung schafft außerdem ein Verfahren zum Betreiben eines erfindungsgemäßen steuerbaren Energiespeichers, wobei die Koppeleinheiten derart gesteuert werden, dass abhängig von einer gewünschten Ausgangsspannung eines Energieversorgungszweiges einer der Teil-Energieversorgungszweige des Energieversorgungszweiges unterbrochen wird.

### Vorteile der Erfindung

Die Erfindung basiert auf der Grundidee, jeden Energieversorgungszweig auf zwei Teil-Energieversorgungszweige mit jeweils umgekehrter Polarität der zugeordneten Energiespeicherzellen aufzuteilen, um auf diese Weise die Möglichkeit einer Spannungsumkehr am Ausgang des Energiespeichermoduls zu schaffen. Abhängig von einer gewünschten Ausgangsspannung (positiv oder negativ) eines Energieversorgungszweiges wird jeweils einer der Teil-Energieversorgungszweige des Energieversorgungszweiges, nämlich derjenige mit den "falsch gepolten" Energiespeicherzellen, unterbrochen. Im Gegensatz zu der aus dem Stand der Technik bekannten Anordnung ist es dabei aber nicht erforderlich, dass die Koppeleinheiten als Vollbrücken ausgestaltet sind. Vielmehr kann die geforderte Funktion der Koppeleinheiten auch mit einer geringeren Anzahl an steuerbaren Schaltelementen realisiert werden. Dies hat zur Folge, dass ein Betriebsstrom über eine geringere Anzahl an Schaltelementen geleitet wird, was zu einer Verringerung der Verluste an den Schaltelementen führt.

Werden die Phasen einer elektrischen Maschine an die Energieversorgungszweige des erfindungsgemäßen steuerbaren Energiespeichers angeschlossen, so können die Phasen abhängig von den Schaltzuständen der Koppeleinheiten entweder gegen ein hohes positives Bezugspotential, ein mittleres Bezugspotential oder ein niedriges negatives Bezugspotential geschaltet werden. Der erfindungsgemäße steuerbare Energiespeicher kann insofern auch die Funktion eines bekannten Wechselrichters erfüllen. Damit können Leistung und Betriebsart der elektrischen Maschine bei geeigneter Ansteuerung der Koppeleinheiten durch den steuerbaren Energiespeicher gesteuert werden.

Gemäß einer bevorzugten Ausführungsform der Erfindung sind die Koppeleinheit als Halbbrücken ausgestaltet, so dass der Betriebsstrom jeweils nur über ein Schaltelement des jeweiligen Energiespeichermoduls geleitet wird. Die Verluste an den Schaltelementen werden auf diese Weise minimiert.

Weitere Merkmale und Vorteile von Ausführungsformen der Erfindung ergeben sich aus der nachfolgenden Beschreibung mit Bezug auf die beigefügte Zeichnung.

### Kurze Beschreibung der Zeichnung

Es zeigt:

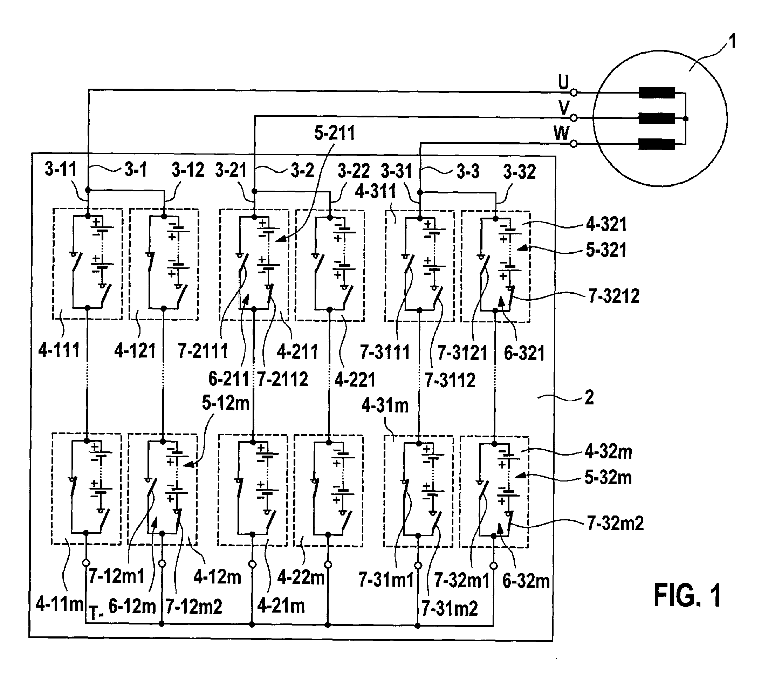

- Fig. 1: eine schematische Darstellung eines erfindungsgemäßen steuerbaren Energiespeichers.

### Ausführungsformen der Erfindung

Figur 1 zeigt eine schematische Darstellung eines erfindungsgemäßen steuerbaren Energiespeichers. An eine dreiphasige elektrische Maschine 1 ist ein steuerbarer Energiespeicher 2 angeschlossen. Der steuerbare Energiespeicher 2 umfasst drei Energieversorgungszweige 3-1, 3-2 und 3-3, welche einerseits mit einem Bezugspotential T- (Bezugsschiene), welches in den dargestellten Ausführungsformen ein niedriges Potential führt, und andererseits jeweils mit einzelnen Phasen U, V, W der elektrischen Maschine 1 verbunden sind. Die Energieversorgungszweige 3-1, 3-2 und 3-3 weisen jeweils einen ersten Teil-Energieversorgungszweig 3-11 bzw. 3-21 bzw. 3-31 und einen dazu parallel geschalteten zweiten Teil-Energieversorgungszweig 3-12 bzw. 3-22 bzw. 3-32 auf. Jeder Teil-Energieversorgungszweig 3-11, 3-12, 3-21, 3-22, 3-31, 3-32 weist jeweils m in Reihe geschaltete Energiespeichermodule 4-111 bis 4-11m bzw. 4-121 bis 4-12m bzw. 4-211 bis 4-21 m bzw. 4-221 bis 4-22m bzw. 4-311 bis 4-31 m bzw. 4-321 bis 4-32m auf, wobei m ≥ 2. Die Energiespeichermodule 4 wiederum umfassen jeweils mehrere in Reihe geschaltete elektrische Energiespeicherzellen, welche aus Gründen der Übersichtlichkeit nur teilweise mit Bezugszeichen 5-12m, 5-211 und 5-321 bis 5-32m versehen sind. Die Energiespeichermodule 4 umfassen des Weiteren jeweils eine Koppeleinheit, welche den Energiespeicherzellen 5 des jeweiligen Energiespeichermoduls 4 zugeordnet ist. Aus Gründen der Übersichtlichkeit sind lediglich einige Koppeleinheiten mit Bezugszeichen 6-12m, 6-211 und 6-321 bis 6-32m versehen. In den dargestellten Ausführungsvarianten werden die Koppeleinheiten 6 jeweils durch zwei steuerbare Schaltelemente 7-12m1 und 7-12m2 bzw. 7-2111 und 7-2112 bzw. 7-3211 und 7-3212 bis 7-32m1 und 7-32m2 gebildet, welche jeweils in Form einer Halbbrücke verschaltet sind. Die Schaltelemente können dabei als Leistungshalbleiterschalter, z.B. in Form von IGBTs (Insulated Gate Bipolar Transistors) oder als MOSFETs (Metal Oxide Semiconductor Field-Effect Transistors), ausgeführt sein.

Die Koppeleinheiten 6 ermöglichen es, den jeweiligen Teil-Energieversorgungszweig 3-11, 3-12, 3-21, 3-22, 3-31, 3-32 durch Öffnen aller Schaltelemente 7 einer Koppeleinheit 6 zu unterbrechen. Alternativ können die Energiespeicherzellen 5 durch Schließen von jeweils einem der Schaltelemente 7 einer Koppeleinheit 6 entweder überbrückt werden, z.B. Schließen des Schalters 7-3111, oder in den jeweiligen Teil-Energieversorgungszweig geschaltet werden, z.B. Schließen des Schalters 7-3112.

Die Energiespeicherzellen 5-111 bis 5-11m, 5-211 bis 5-21 m und 5-311 bis 5-31 m in den ersten Teil-Energieversorgungszweigen 3-11 bzw. 3-21 bzw. 3-31 und die Energiespeicherzellen 5-121 bis 5-12m, 5-221 bis 5-22m und 5-321 bis 5-32m in den zweiten Teil-Energieversorgungszweigen 3-12 bzw. 3-22 bzw. 3-32 sind antiparallel angeordnet, so dass sie entgegengesetzte Polaritäten aufweisen. Im dargestellten Ausführungsbeispiel sind die Pluspole der Energiespeicherzellen in den ersten Teil-Energieversorgungszweigen 3-11, 3-21 und 3-31 den Phasen U bzw. V bzw. W der elektrischen Maschine 1 und die Minuspole dieser Energiespeicherzellen der Bezugsschiene T- zugewandt. Dementsprechend sind die Minuspole der Energiespeicherzellen in den zweiten Teil-Energieversorgungszweigen 3-12, 3-22 und 3-32 den Phasen U bzw. V bzw. W der elektrischen Maschine 1 und die Pluspole dieser Energiespeicherzellen der Bezugsschiene T- zugewandt.

Abhängig von einer gewünschten Ausgangsspannung eines Energieversorgungszweiges 3 wird in jedem Energieversorgungszweig 3-1, 3-2, 3-3 einer der Teil-Energieversorgungszweige 3-11 oder 3-12, 3-21 oder 3-22, 3-31 oder 3-32 des jeweiligen Energieversorgungszweiges 3-1 bzw. 3-2 bzw. 3-3 unterbrochen. In dem jeweils anderen Teil-Energieversorgungszweig 3-12 oder 3-11, 3-22 oder 3-21, 3-32 oder 3-31 werden durch entsprechende Ansteuerung der zugeordneten Koppeleinheiten 6 die Energiespeicherzellen 5 so vieler Energiespeichermodule 4 in den jeweiligen Teil-Energieversorgungszweig 3-12 oder 3-11, 3-22 oder 3-21, 3-32 oder 3-31 geschaltet, dass sich als Gesamt-Ausgangsspannung des jeweiligen Energieversorgungszweiges 3 die gewünschte Ausgangsspannung einstellt.

Die Gesamt-Ausgangsspannungen der Teil-Energieversorgungszweige 3-11, 3-12, 3-21, 3-22, 3-31, 3-32 und damit der Energieversorgungszweige 3-1 bis 3-3 werden bestimmt durch den jeweiligen Schaltzustand der steuerbaren Schaltelemente 7 der Koppeleinheiten 6 und können stufig eingestellt werden. Die Stufung ergibt sich dabei in Abhängigkeit von der Spannung der einzelnen Energiespeichermodule 4. Geht man von der bevorzugten Ausführungsform gleichartig ausgestalteter Energiespeichermodule 4 aus, so ergibt sich eine maximal mögliche Gesamt-Ausgangsspannung aus der Spannung eines einzelnen Energiespeichermoduls 4 mal der Anzahl m der pro Energieversorgungszweig 3 in Reihe geschalteten Energiespeichermodule 4. Aufgrund der Aufteilung der Energieversorgungszweige 3 in jeweils zwei Teil-Energieversorgungszweige mit entgegengesetzter Polarität der jeweiligen Energiespeicherzellen 5, können die Spannungen sowohl mit positivem als auch mit negativem Vorzeichen erzeugt werden.

Bei dem in Figur 1 dargestellten konkreten Ausführungsbeispiel sei angenommen, dass die Energieversorgungszweige 3-1 und 3-3 eine negative Spannung abgegeben sollen. Dazu werden einerseits die beiden Teil-Energieversorgungszweige 3-11 bzw. 3-31, welche zur Abgabe einer positiven Spannung dienen, durch entsprechende Ansteuerung von zumindest einer der Koppeleinheiten 6 in dem jeweiligen Teil-Energieversorgungszweig 3-11 und 3-31 unterbrochen. Konkret wird dies wird dadurch erreicht, dass, wie dargestellt z.B. jeweils beide Schaltelemente 7 der Koppeleinheiten 4-111 bzw. 4-311 geöffnet werden. Andererseits werden in den Teil-Energieversorgungszweigen 3-12 und 3-32 durch entsprechende Ansteuerung der Koppeleinheiten 6 so viele Energiespeicherzellen 5 in den jeweiligen Teil-Energieversorgungszweig 3-12 bzw. 3-32 geschaltet, dass die gewünschte negative Ausgangsspannung erreicht wird. Die übrigen Energiespeicherzellen 5 in diesen Teil-Energieversorgungszweigen 3-12 und 3-32 werden durch entsprechende Ansteuerung der zugeordneten Koppeleinheiten 6 jeweils überbrückt. Beispielhaft sind in Figur 1 die Energiespeicherzellen 5-12m des Energiespeichermoduls 4-12m sowie 5-321 und 5-32m der Energiespeichermodule 4-321 bzw. 4-32m in den jeweiligen Teil-Energieversorgungszweig 3-12 bzw. 3-32 geschaltet (Schaltelemente 7-12m1 bzw. 7-3211 bzw. 7-32m1 geöffnet und Schaltelemente 7-12m2 bzw. 7-3212 bzw. 7-32m2 geschlossen. Die Energiespeicherzellen 5 des Energiespeichermoduls 4-111 dagegen sind überbrückt (beide Schaltelemente 7 geöffnet).

Weiter sei bei dem Ausführungsbeispiel gemäß Figur 1 angenommen, dass der Energieversorgungszweig 3-2 eine positive Spannung abgeben soll. Dazu wird in analoger Weise zum einen der "falsch gepolte" Energieversorgungszweig, in diesem Fall 3-22, unterbrochen. Zum anderen wird in den anderen Teil-Energieversorgungszweig 3-21 eine ausreichende Anzahl an Energiespeicherzellen 5 geschaltet. Im konkret dargestellten Beispiel sind die Energiespeicherzellen 5-211 des Energiespeichermoduls 4-211 durch Öffnen des Schaltelements 7-2111 und Schließen des Schaltelements 7-2112 in den Teil-Energieversorgungszweig 3-21 und damit in den Energieversorgungszweig 3-2 geschaltet, wohingegen die Energiespeicherzellen 5 des Energiespeichermoduls 4-21 m überbrückt sind.

Die Koppeleinheiten 6 erlauben es damit, die Phasen U, V, W der elektrischen Maschine 1 unabhängig voneinander entweder gegen ein hohes positives Bezugspotential, ein mittleres Bezugspotential oder ein niedriges negatives Bezugspotential zu schalten und können insofern auch die Funktion eines bekannten Wechselrichters erfüllen. Damit können Leistung und Betriebsart der elektrischen Maschine 1 bei geeigneter Ansteuerung der Koppeleinheiten 6 durch den steuerbaren Energiespeicher 2 gesteuert werden. Der steuerbare Energiespeicher 2 erfüllt also insofern eine Doppelfunktion, da er einerseits der elektrischen Energieversorgung andererseits aber auch der Steuerung der elektrischen Maschine 1 dient.

Die elektrische Maschine 1 weist Statorwicklungen 8-U, 8-V und 8-W auf, die in bekannter Weise in Sternschaltung miteinander verschaltet sind.

Die elektrische Maschine 1 ist in den dargestellten Ausführungsbeispielen als dreiphasige Drehstrommaschine ausgeführt, kann aber auch weniger oder mehr als drei Phasen aufweisen. Nach der Phasenanzahl der elektrischen Maschine richtet sich natürlich auch die Anzahl der Energieversorgungszweige 3 in dem steuerbaren Energiespeicher 2.

In den dargestellten Ausführungsbeispielen weist jedes Energiespeichermodul 4 jeweils mehrere in Reihe geschaltete Energiespeicherzellen 5 auf. Die Energiespeichermodule 4 können aber alternativ auch jeweils nur eine einzige Energiespeicherzelle oder auch parallel geschaltete Energiespeicherzellen aufweisen.

In den dargestellten Ausführungsbeispielen werden die Koppeleinheiten 6 jeweils durch zwei steuerbare Schaltelemente 7 in Form einer Halbbrücke gebildet. Die Koppeleinheiten 6 können aber auch mit Hilfe einer anderen Verschaltung oder auch durch mehr oder weniger steuerbare Schaltelemente realisiert sein, solange die notwendigen Funktionen (Unterbrechen der Teil-Energieversorgungszweige, Überbrücken der Energieversorgungszellen und Schalten der Energieversorgungszellen in den Teil-Energieversorgungszweig) realisierbar sind.

Der steuerbare Energiespeicher 2 erlaubt es auch, ein gewünschte Ausgangsspannung einzustellen, welche zwischen zwei Spannungsstufen liegt. Dazu wird eine der Koppeleinheiten 6 des betroffenen Energieversorgungszweiges 3 derart impulsförmig mit einem vorgebbaren Tastverhältnis angesteuert, dass der arithmetische Mittelwert der Gesamt-Ausgangsspannung eines Teil-Energieversorgungszweiges bzw. eines Energieversorgungszweiges 3 der gewünschten Ausgangsspannung entspricht. Dabei werden die dieser Koppeleinheit 6 jeweils zugeordneten Energiespeicherzellen 5 während einer Impulsdauer in den jeweiligen Energieversorgungszweig 3 geschaltet werden und während einer Pausendauer überbrückt.

## Patentansprüche

1. Steuerbarer Energiespeicher (2) mit n parallelen Energieversorgungszweigen (3-1, 3-2, 3-3), mit n ≥ 1, welche jeweils einen ersten Teil-Energieversorgungszweig (3-11; 3-21; 3-31) und einen dazu parallel geschalteten zweiten Teil-Energieversorgungszweig (3-12; 3-22; 3-32) aufweisen, wobei
- jeder Teil-Energieversorgungszweig (3-11; 3-12; 3-21; 3-22; 3-31; 3-32) jeweils mindestens ein Energiespeichermodul (4) aufweist, welches jeweils mindestens eine elektrische Energiespeicherzelle (5) mit einer zugeordneten steuerbaren Koppeleinheit (6) umfasst,
- die Koppeleinheiten (6) in Abhängigkeit von Steuersignalen den Teil-Energieversorgungszweig (3-11; 3-12; 3-21; 3-22; 3-31; 3-32) unterbrechen oder die jeweils zugeordneten Energiespeicherzellen (5) überbrücken oder die jeweils zugeordneten Energiespeicherzellen (5) in den jeweiligen Teil-Energieversorgungszweig (3-11; 3-12; 3-21; 3-22; 3-31; 3-32) schalten, **dadurch gekennzeichnet, dass**
- die Energiespeicherzellen (5) der Energiespeichermodule (4) in dem ersten Teil-Energieversorgungszweig (3-11; 3-21; 3-31) und die Energiespeicherzellen (5) der Energiespeichermodule (4) in dem zweiten Teil-Energieversorgungszweig (3-12; 3-22; 3-32) antiparallel angeordnet sind.

2. Steuerbarer Energiespeicher nach Anspruch 1, wobei die Koppeleinheiten (6) als Halbbrücken ausgebildet sind.

3. Verfahren zum Betreiben eines steuerbaren Energiespeichers (2) gemäß einem der Ansprüche 1 oder 2, wobei die Koppeleinheiten (6) derart gesteuert werden, dass abhängig von einer gewünschten Ausgangsspannung eines Energieversorgungszweiges (3-1; 3-2; 3-3) einer der Teil-Energieversorgungszweige (3-11; 3-12; 3-21; 3-22; 3-31; 3-32) des Energieversorgungszweiges (3-1; 3-2; 3-3) unterbrochen wird.

## Claims

1. Controllable energy storage device (2) having n parallel energy supply branches (3-1, 3-2, 3-3) wherein n ≥ 1, which energy supply branches comprise a first energy supply sub-branch (3-11; 3-21; 3-31) and a second energy supply sub-branch (3-12; 3-22; 3-32) that is connected in parallel to said first energy supply sub-branch, wherein:
- each energy supply sub-branch (3-11; 3-12; 3-21; 3-22; 3-31; 3-32) comprises in each case at least one energy storage module (4) that comprises in each case at least one electrical energy storage cell (5) having an allocated controllable coupling unit (6),
- in response to control signals, the coupling units (6) disconnect the energy supply sub-branch (3-11; 3-12; 3-21; 3-22; 3-31; 3-32) or bridge the respectively allocated energy storage cells (5) or connect the respectively allocated energy storage cells (5) into the respective energy supply sub-branch (3-11; 3-12; 3-21; 3-22; 3-31; 3-32), **characterized in that**
- the energy storage cells (5) of the energy storage modules (4) in the first energy supply sub-branch (3-11; 3-21; 3-31) and the energy storage cells (5) of the energy storage modules (4) in the second energy supply sub-branch (3-12; 3-22; 3-32) are arranged in an anti-parallel manner.

2. Controllable energy storage device according to Claim 1, wherein the coupling units (6) are embodied as half bridges.

3. Method for operating a controllable energy storage device (2) according to any one of Claims 1 or 2, wherein the coupling units (6) are controlled in such a manner that in dependence upon a desired output voltage of an energy supply branch (3-1; 3-2; 3-3) one of the energy supply sub-branches (3-11; 3-12; 3-21; 3-22; 3-31; 3-32) of the energy supply branch (3-1; 3-2; 3-3) is disconnected.

## Revendications

1. Accumulateur d'énergie commandable (2) comprenant n ramifications d'alimentation en énergie parallèles (3-1, 3-2, 3-3), avec n ≥ 1, qui présentent à chaque fois une première ramification d'alimentation en énergie partielle (3-11 ; 3-21 ; 3-31) et une deuxième ramification d'alimentation en énergie partielle (3-12 ; 3-22 ; 3-32) montée parallèlement à celle-ci,
- chaque ramification d'alimentation en énergie partielle (3-11 ; 3-12 ; 3-21 ; 3-22 ; 3-31 ; 3-32) présentant à chaque fois au moins un module accumulateur d'énergie (4) qui comprend à chaque fois au moins une cellule d'accumulateur d'énergie électrique (5) avec une unité d'accouplement commandable associée (6),
- les unités d'accouplement (6), en fonction de signaux de commande, interrompant la ramification d'alimentation en énergie partielle (3-11 ; 3-12 ; 3-21 ; 3-22 ; 3-31 ; 3-32) ou pontant les cellules d'accumulateur d'énergie respectivement associées (5) ou commutant les cellules d'accumulateur d'énergie respectivement associées (5) dans la ramification d'alimentation en énergie partielle respective (3-11 ; 3-12 ; 3-21 ; 3-22 ; 3-31 ; 3-32),
**caractérisé en ce que**
- les cellules d'accumulateur d'énergie (5) des modules accumulateurs d'énergie (4) dans la première ramification d'alimentation en énergie partielle (3-11 ; 3-21 ; 3-31) et les cellules d'accumulateur d'énergie (5) des modules accumulateurs d'énergie (4) dans la deuxième ramification d'alimentation en énergie partielle (3-12 ; 3-22 ; 3-32) sont disposées de manière antiparallèle.

2. Accumulateur d'énergie commandable selon la revendication 1, dans lequel les unités d'accouplement (6) sont réalisées sous forme de demi-ponts.

3. Procédé pour faire fonctionner un accumulateur d'énergie commandable (2) selon l'une quelconque des revendications 1 ou 2, dans lequel les unités d'accouplement (6) sont commandées de telle sorte qu'en fonction d'une tension de sortie souhaitée d'une ramification d'alimentation en énergie (3-1 ; 3-2 ; 3-3), l'une des ramifications d'alimentation en énergie partielles (3-11 ; 3-12 ; 3-21 ; 3-22 ; 3-31 ; 3-32) de la ramification d'alimentation en énergie (3-1 ; 3-2 ; 3-3) soit interrompue.
